(19) Europäisches Patentamt
European Patent Office
Office européen des brevets

(11) **EP 3 304 671 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(51) Int Cl.:
***H02H 9/04*** *(2006.01)*    ***H02H 9/06*** *(2006.01)*
***H01T 15/00*** *(2006.01)*

(21) Anmeldenummer: **16724639.6**

(22) Anmeldetag: **24.05.2016**

(86) Internationale Anmeldenummer:
**PCT/EP2016/061672**

(87) Internationale Veröffentlichungsnummer:
**WO 2016/193059 (08.12.2016 Gazette 2016/49)**

(54) **ÜBERSPANNUNGSSCHUTZSCHALTUNG**

OVERVOLTAGE PROTECTION CIRCUIT

CIRCUIT DE PROTECTION CONTRE LES SURTENSIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2015 DE 102015108652**

(43) Veröffentlichungstag der Anmeldung:
**11.04.2018 Patentblatt 2018/15**

(73) Patentinhaber: **ebm-papst Mulfingen GmbH & Co. KG**
**74673 Mulfingen (DE)**

(72) Erfinder:
• **SCHNEIDER, Fabian**
  **74585 Rot am See (DE)**
• **KÖNIG, Daniel**
  **74582 Gerabronn (DE)**

(74) Vertreter: **Staeger & Sperling Partnerschaftsgesellschaft mbB Sonnenstraße 19 80331 München (DE)**

(56) Entgegenhaltungen:
CH-A5- 596 682    DE-A1- 3 834 514
US-A1- 2008 122 573

**Beschreibung**

Die Erfindung betrifft eine Überspannungsschutzschaltung zum Schutz der Elektronik eines Motors, insbesondere eines EC-Motors gegen Überspannungsimpulse, sowie eine entsprechende diesbezügliche Methode. Schutzeinrichtungen zum Schutz der Schaltungen oder der Umrichter für Motoren, insbesondere EC-Motoren sind im Stand der Technik in unterschiedlichen Ausführungsformen bekannt. So sind auch Umrichter hinreichend bekannt, welche einen Gleichrichter zum Erzeugen einer unipolaren Zwischenkreisspannung aus einer dreiphasigen Netzspannung, insbesondere einer Drehspannung, einen Zwischenkreiskondensator, der an der Zwischenkreisspannung angeschlossen ist und eine Leistungsschalter umfassende Endstufe, umfassen.

So beschäftigt sich die DE 102007007921 A1 mit dem Schutz vor Überspannungen vor dem Hintergrund, dass als Zwischenkreiskondensatoren meist Elektrolytkondensatoren verwendet werden, die zum Puffern der Energie des Zwischenkreises und der Zwischenkreisspannung dienen. Nachteilig ist dabei, dass beim derzeitigen Stand der Technik die Kapazität des Zwischenkreiskondensators größer als funktional notwendig ist. Funktional notwendig ist dabei insbesondere eine ausreichende Glättung bei Betrieb mit Nennlast. Die Kapazität kann also beim Stand der Technik nicht nach funktionalen, sondern muss nach bautechnischen Anforderungen, wie Lebensdauer und Strombelastbarkeit gewählt werden.

Die DE 102007007921 A1 schlägt zum Schutz gegen Überspannungen vor, dem Zwischenkreiskondensator ein Schaltungsteil parallel zuzuschalten, das aus einem Spannungsteiler,insbesondere aus einem ohmschen, kapazitiven und/oder komplexen Spannungsteiler, besteht, in dessen unterem Zweig ein Varistor angeordnet ist und dessen oberem Zweig ein Gasableiter parallel beschaltet angeordnet ist.

Allerdings treten bei Gasableitern, wie diese typischerweise im Stand der Technik verwendet werden u.a. die folgenden Probleme auf. Bei der Verwendung eines Gasableiters z. B. im Sternpunkt einer Varistorbeschaltung im Eingangsfilter für eine dreiphasig gespeiste EC-Motor-Elektronik mit einer höheren Durchzündspannung als die Spannung zur Durchführung der Hochspannungsprüfung (um ein ansonsten manuelles Trennen der Schutzeinrichtung während dieser Prüfung zu umgehen) führt zu einer reduzierten Schutzwirkung gegen Überspannungspulse (Surge-Pulse), da der Gasableiter auch in diesem Fall erst bei der höherer Spannung durchzündet und somit ein erhöhter Energieabbau, bzw. -aufnahme in den nachfolgenden Bauelementen der Elektronik erfolgt.

Unterhalb der Zündspannung des Gasableiters verhält sich das parallel zur zu schützenden Leitung angeschlossene Bauteil wie ein Isolator und beeinflusst diese nicht. Ab einer bauteilspezifischen Zündspannung zündet im Gasableiter jedoch eine Gasentladung und die Klemmenspannung an ihm reduziert sich bei Strömen durch eine Bogenentladung (Lichtbogenzündung) innerhalb weniger Mikrosekunden. Im Unterschied zu anderen Überspannungsableitern, wie z.B. Suppressordioden oder Varistoren sinkt also die Klemmenspannung gegebenenfalls weit unter die Nennspannung ab, was bei Netzanwendungen einem Kurzschluss gleichkommt. Gasableiter reagieren ferner langsamer als Varistoren oder Suppressordioden, können jedoch hohe Impulsenergien ableiten. Es gibt für die gewünschten Zündspannungen entsprechende Ausführungen. Die tatsächliche Zündspannung liegt bei steilen Impulsen d.h. bei schnellem Spannungsanstieg weit über dem Nennwert. Während der Strom nach dem Ansprechen fließt, stellt sich eine Brennspannung ein.

Zur technischen Prüfung eingesetzte Geräte der Schutzklasse I und II wird mit einer Hochspannungsprüfung überprüft, ob die Isolation eine nach der produktspezifischen Norm vorgeschriebene Spannungsfestigkeit hat. Dabei wird festgestellt, ob die Isolation der stromführenden Leiter sowie der Sicherheitsabstand zum Gehäuse in Ordnung ist. Prinzipiell wird diese Hochspannungsprüfung an denselben Anschlussstellen wie bei der Isolationswiderstandsprüfung durchgeführt. Die Prüfung wird jedoch mit höheren Prüfspannungen durchgeführt als die im normalen Betrieb auftretenden Betriebsspannungen. Die Prüfspannung kann sowohl eine Wechsel- als auch eine Gleichspannung sein und liegt typischerweise im Bereich einiger weniger Kilovolt.

Ist demnach die Durchzündspannung höher als die Spannung zur Durchführung der Hochspannungsprüfung und erfolgt somit ein erhöhter Energieabbau, bzw. die Aufnahme in den nachfolgenden Bauelementen der Elektronik mit unerwünschter elektrischer Energie, so können diese durch Überspannung oder Überstrom stärker als nötig belastet und evtl. zerstört werden, was das erfolgreiche Bestehen der Stoßspannungsprüfung (Surge-Prüfung) insbesondere bei hohen geforderten Prüfspannungen stark erschwert. Die gewünschte Schutzwirkung des Gasableiters ist somit durch die ausschließlich für die Hochspannungsprüfung erforderliche erhöhte Durchzündspannung nicht gegeben.

Die Erfindung betrifft demnach dengeeigneten Schutz einer Elektronik gegen Überspannungsimpulse (Surge-Prüfung) durch Schutzeinrichtungen wie z. B. Gasableiter bei gleichzeitiger Möglichkeit eine Hochspannungsprüfbarkeit bereitzustellen. Da bei der Hochspannungsprüfung die Spannungsfestigkeit des Gerätes durch das Anlegen einer (langsam) ansteigenden Prüfspannung über eine definierte Spannungsrampe bis zu einer vorgegebenen Prüfspannung geprüft, gilt die Prüfung dann als bestanden, wenn keinentsprechender Stromfluss detektiert wird. Sind aber in der Elektronik Schutzelemente wie z.B. Gasableiter vorhanden müssen diese so dimensioniert werden, dass diese während dieser Prüfung bei langsamem Spannungsanstieg nicht ansprechen (Durchzünden), da die Prüfung ansonsten als nicht bestanden gewertet wird.

Somit müssen die Schutzelemente üblicherweise mit einer erhöhten Spannungsfestigkeit (Durchzündspannung) ausgelegt werden, wodurch aber der gewünschte Schutz nicht mehr erzielt werden kann. Die Durchzündspannung liegt dann in nachteiliger Weise oberhalb der Prüfspannung und somit auch weit oberhalb der für den Normalbetrieb der Elektronik erforderlichen Spannungsfestigkeit.

Bei der Surge-Prüfung hingegen ist ein möglichst frühes und schnelles Ansprechen des Gasableiters gewünscht, um seiner eigentlich gewünschten Schutzfunktion, d.h. der Energieaufnahme bei Auftreten eines Überspannungspulses, optimal gerecht zu werden.

Weiterer druckschriftlicher Stand der Technik im vorliegenden technischen Gebiet, welcher den Oberbegriff des Anspruchs 1 widerspiegelt, ist in dem Dokument CH 596 682 A5 offenbart.

Der Erfindung liegt deshalb die Aufgabe zugrunde, vorbesagte Nachteile zu überwinden und eine Schutzschaltung zum Schutz vor Überspannungen vorzusehen, die einen verbesserten Schutz für eine Motorelektronik bereitstellt und gleichzeitig einen Hochspannungstest zur Prüfung der Isolationsfestigkeit ermöglicht.

Diese Aufgabe wird durch eine Überspannungsschutzschaltung nach Anspruch 1 und eine entsprechende Methode nach Anspruch 6 gelöst. Grundgedanke der Erfindung ist es eine Schaltungsanordnung mit zwei in Serienschaltung angeordneten Schutzeinrichtungen (vorzugsweise Gasableiter), mit zwei parallelen Widerständen, sowie mit wenigstens einem kapazitiven zu einer Schutzvorrichtung parallel geschalteten Element (vorzugsweise ein Kondensator) vorzusehen, wobei die Steuerung der Durchzündspannung der Gesamtanordnung in Abhängigkeit der Flankensteilheit einer zwischen den Anschlussklemmen der Schaltung angelegten Spannung erfolgt, d. h. ab welcher Spannung in einem bzw. beiden Gasableitern ein Lichtbogen zündet und somit die Spannung zwischen den Klemmen auf die entsprechend niedrigere Brennspannung der Lichtbögen in den Gasableitern begrenzt wird. So wird bei einem langsamen Anstieg der Spannung, wie diese bestimmungsgemäß zum Beispiel bei einer durchgeführten Hochspannungsprüfung des Gerätes auftritt, eine hohe Durchzündspannung $U_{Z2}$ erreicht werden, die vorzugsweise der Summe der Einzelzündspannungen der Schutzeinrichtungen entspricht. Hingegen soll bei einem schnellen Spannungsanstieg, wie sie zum Beispiel bei einem Überspannungspuls aus dem Netz oder bei der Surge-Prüfung des Gerätes auftritt, ein Ansprechen bei einer entsprechend niedrigere Durchzündspannung $U_{Z1}$ erfolgen, die vorzugsweise der Zündspannung des Gasableiters entspricht, der ohne das parallelgeschaltete kapazitive Element bzw. den Kondensator in der Schaltungsanordnung vorgesehen ist.

Insgesamt wird somit die Prüfbarkeit des Gerätes in der Hochspannungsprüfung ohne Zündung der Gasableiterschaltung (nicht bestandene Hochspannungsprüfung) in Kombination mit einer optimalen Schutzwirkung der Gasableiter gegen Surge-Pulse aus dem Netz erreicht.

Erfindungsgemäß wird demnach eine Überspannungsschutzschaltung zum Schutz der Elektronik eines Motors, insbesondere eines EC-Motors gegen Überspannungsimpulse vorgeschlagen, die mit zwei zwischen zwei Anschlüssen in Reihenschaltung angeordneten Schutzeinrichtungen ausgebildet ist, wobei zu jeder der Schutzeinrichtungen je ein Widerstand parallel geschaltet ist und ein kapazitives Element (vorzugsweise ein Kondensator) in Parallelschaltung zu wenigstens der ersten Schutzeinrichtung vorgesehen ist, wobei die Überspannungsschutzschaltung zwischen den Anschlüssen wenigstens einen ersten (niedrigen) und zweiten (höheren) Durchbruch- bzw. Durchzündspannungspunkt bei einer Spannung $U_{Z1}$ bzw. $U_{Z2}$ in Abhängigkeit von der zeitlichen Spannungsänderung k=(dU/dt) einer Spannung $U_{GA}$ an den Anschlüssen besitzt.

So lässt sich folgender Zusammenhang festhalten:

$U_{Z1}$ für k ∈ [$k_1$, $k_2$], wobei [$k_1$, $k_2$] einen Bereich von großen Spannungsänderungen zwischen den Werten $k_1$ und $k_2$ definiert, die jeweils den Bereich von Spannungsimpulsen mit steilem Flankenanstieg definiert;

$U_{Z2}$ für k ∈ [$k_3$, $k_4$] wobei [$k_3$, $k_4$] einen Bereich von langsamen Spannungsänderungen zwischen den Werten $k_3$ und $k_4$ definiert, die jeweils den Bereich einer Spannungsprüfung mit flachem Flankenanstieg (flache Spannungsrampe) definiert.

Die Bereiche können so gewählt werden, dass jeweils nur ein einziger Wert k zu Grunde gelegt wird (d.h. z. B. $k_1$ = $k_2$), aber auch ganze Intervalle innerhalb dessen das Ansprechverhalten der Schutzeinrichtung gewährleistet ist.

In einer bevorzugten Ausführungsform der Erfindung ist vorgesehen, dass jede Schutzeinrichtung einen spannungsabhängigen Widerstand aufweist und unterhalb einer jeweiligen schutzeinrichtungsspezifischen Durchbruch- bzw. Durchzündspannung jeweils isolierend und oberhalb der entsprechenden Durchbruch- bzw. Durchzündspannung leitend ist.

Es ist weiter mit Vorteil vorgesehen, dass die Schutzeinrichtungen als Gasableiter, Überspannungsableiter oder als Varistoren ausgebildet sind.

In einer weiter bevorzugten Ausbildung der Erfindung wird bei einer schnellen Spannungsänderung der Spannung $U_{GA}$ auf die Durchbruch- bzw. Durchzündspannung $U_{Z1}$ (d.h. bei k gleich oder größer einem systemspezifischen Wert $k_{spez}$ innerhalb des Intervalls [$k_1$, $k_2$]) wenigstens eine der beiden Schutzeinrichtung leitend oder ein Lichtbogen zündet.

Ferner ist mit Vorteil vorgesehen, dass bei einer langsamen Spannungsänderung der Spannung $U_{GA}$ (d.h. bei k kleiner oder gleich einem systemspezifischen Wert $k_{spez}$ innerhalb des Intervalls $[k_3, k_4]$) eine oder beide Schutzeinrichtungen erst bei Erreichen der zweiten (höheren) Durchbruch- bzw. Durchzündspannung $U_{Z2}$ leitend werden oder ein Lichtbogen in wenigstens einer der Schutzeinrichtungen zündet.

In einer ebenfalls bevorzugten Ausführungsform der Erfindung ist vorgesehen, dass die Überspannungsschutzschaltung als eine Serienschaltung von wenigstens zwei Schutzeinrichtung vorzugsweise kaskadenförmig aneinandergereihte Schutzeinrichtungen vorgesehen ist, mit jeweils einem zu der jeweiligen Schutzeinrichtung angeordneter Parallelwiderstand und/oder einem jeweils in Parallelschaltung angeordneten kapazitiven Elementes.

Besonders bevorzugt ist es, wenn das oder die kapazitiven Elemente Kondensatoren darstellen bzw. sind.

Erfindungsgemäß ist weiter eine wie zuvor beschriebene Überspannungsschutzschaltung vorgesehen, die im Sternpunkt einer Varistor-Beschaltung im Eingangsfilter eines dreiphasig gespeisten EC-Motors angeordnet ist.

Erfindungsgemäß ist weiter eine Methode zum Schutz der Elektronik eines Motors, insbesondere eines EC-Motors gegen Überspannungsimpulse mittels einer wie zuvor beschriebenen Überspannungsschutzschaltung vorgesehen, wobei die Schutzeinrichtungen speziell als Gasableiter ausgebildet sind und abhängig von der Flankensteilheit einer zwischen den entsprechenden Anschlüssen angelegten Spannung $U_{GA}$. in wenigstens einer der Gasableiter ein Lichtbogen zündet und somit die Spannung zwischen den Anschlüssen auf eine entsprechend niedrigere Brennspannung $U_{Br}$ der Lichtbögen in den Gasableitern begrenzt wird.

In einer ebenfalls bevorzugten Ausführungsform der erfindungsgemäßen Methode ist angedacht, dass bei einem langsamen Anstieg der Spannung eine gegenüber der Durchzündspannung $U_{Z1}$ hohe bzw. vergleichsweise höhere Durchzündspannung $U_{Z2}$, die vorzugsweise der Summe der Einzelzündspannungen der Gasableiter entspricht, erreicht wird bei der ein Lichtbogen in einem der Gasableiter zündet und hingegen bei einem schnellen Anstieg der Spannung bereits bei Erreichen der niedrigeren Durchzündspannung $U_{Z1}$, die vorzugsweise der Zündspannung des Gasableiters (und zwar des gasableiters ohne parallelgeschaltetes kapazitiven Elements (bzw. Kondensator)) entspricht, ein Lichtbogen vorzugsweise unmittelbar nacheinander in beiden Gasableitern zündet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig.1    ein erstes Ausführungsbeispiel einer erfindungsgemäßen Überspannungsschutzschaltung;

Fig.2    das Ansprechverhalten bei einem langsamen Spannungsanstieg bei einer hohen Durchzündspannung $U_{Z2}$ und der Spannungsabfall auf die Brennspannung $U_{Br}$;

Fig.3    das Ansprechverhalten bei einem schnellen Spannungsanstieg bei einer niedrigen Durchzündspannung $U_{Z1}$ und der Spannungsabfall auf die Brennspannung $U_{Br}$;

Fig.4    Ersatzschaltbild der Spannungsverteilung;

Fig.5    Spannungsverlauf der Spannung $U_2$ aus der Figur 4 im Verhältnis zur Gesamtspannung;

Fig.6    Verlauf der Zündspannung der Schutzschaltung bezogen auf die Zündspannung des zweiten Gasableiters in Abhängigkeit der Anstiegszeit der angelegten Spannung bei symmetrischer Dimensionierung der Parallelwiderstände;

Fig.7    ein zweites Ausführungsbeispiel einer erfindungsgemäßen Überspannungsschutzschaltung;

Fig.8    ein drittes Ausführungsbeispiel einer erfindungsgemäßen Überspannungsschutzschaltung;

Fig.8a    ein Detail der Schaltung aus Fig.8 und

Fig.9    eine Anordnung der erfindungsgemäßen Schutzschaltung nach Figur 1 im Sternpunkt einer Varistor-Beschaltung im Eingangsfilter eines dreiphasig gespeisten EC-Motors.

Im Folgenden wird die Erfindung anhand beispielhafter Ausführungsformen beschrieben, wobei gleiche Bezugszeichen auf gleiche strukturelle und/oder funktionale Merkmale hinweisen.

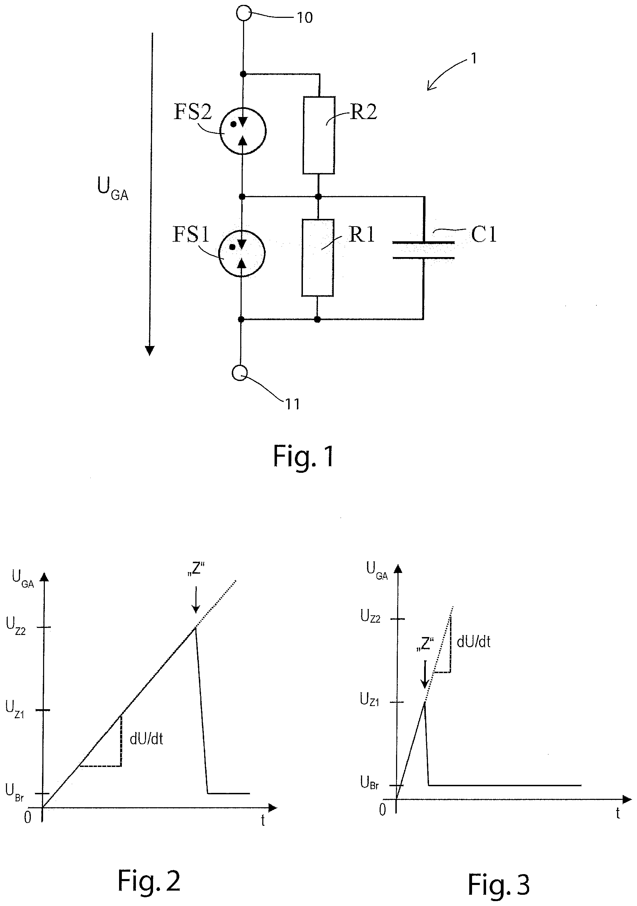

In der Figur 1 ist ein erstes Ausführungsbeispiel einer erfindungsgemäßen Überspannungsschutzschaltung 1 gezeigt, bestehend aus zwei Gasableitern FS1 und FS2, zwei Widerständen R1 und R2, sowie einem Kondensator C1, wobei die beiden Gasableiter FS1 und FS2 in Serie verschaltet sind und jeweils ein Widerstand R1 bzw. R2 parallel zu den Gasableitern FS1 bzw. FS2 verschaltet ist und der Kondensator C1 parallel zu dem Gasableiter FS1. Die Spannung $U_{GA}$ liegt zwischen den Anschlüssen 10, 20 an.

Die Fig.2 zeigt das Ansprechverhalten bei einem langsamen Spannungsanstieg bei einer hohen Durchzündspannung $U_{Z2}$ und der anschließende Spannungsabfall auf die Brennspannung $U_{Br}$ und die Fig.3 das Ansprechverhalten bei einem schnellen Spannungsanstieg bei einer niedrigen Durchzündspannung $U_{Z1}$ und der Spannungsabfall auf die Brennspannung $U_{Br}$.

Die Funktion der Überspannungsschutzschaltung 1 liegt in der Steuerung der Durchzündspannung der Gesamtanordnung in Abhängigkeit der Flankensteilheit einer zwischen den Anschlüssen 10, 20 der Schaltung angelegten Spannung $U_{GA}$. D. h. ab welcher Spannung in einem, bzw. beiden Gasableitern FS1, FS2 ein Lichtbogen zündet und somit die Spannung $U_{GA}$ zwischen den Klemmen auf die entsprechend niedrigere Brennspannung $U_{Br}$ der Lichtbögen in den Gasableitern begrenzt wird. So soll bei einem langsamen Anstieg der Spannung $U_{GA}$ nach Figur 2, wie sie zum Beispiel bei einer durchgeführten Hochspannungsprüfung des Komplettgerätes erfolgt, eine hohe Durchzündspannung $U_{Z2}$ (vorzugsweise die Summe der Einzelzündspannungen der Gasableiter FS1 und FS2) erreicht werden.

Hingegen soll bei einem schnellen Anstieg der Spannung $U_{GA}$ wie in Figur 3 gezeigt, wie sie zum Beispiel bei einem Überspannungspuls (Surge-Puls) aus dem Netz oder bei der Surge-Prüfung des Komplettgerätes auftritt, eine entsprechend niedrigere Durchzündspannung $U_{Z1}$ erreicht werden. Diese entspricht vorzugsweise der Zündspannung des Gasableiters FS2. Mit dem Bezugszeichen "Z" wird der Durchzündpunkt der Überspannungsschutzschaltung 1 dargestellt.

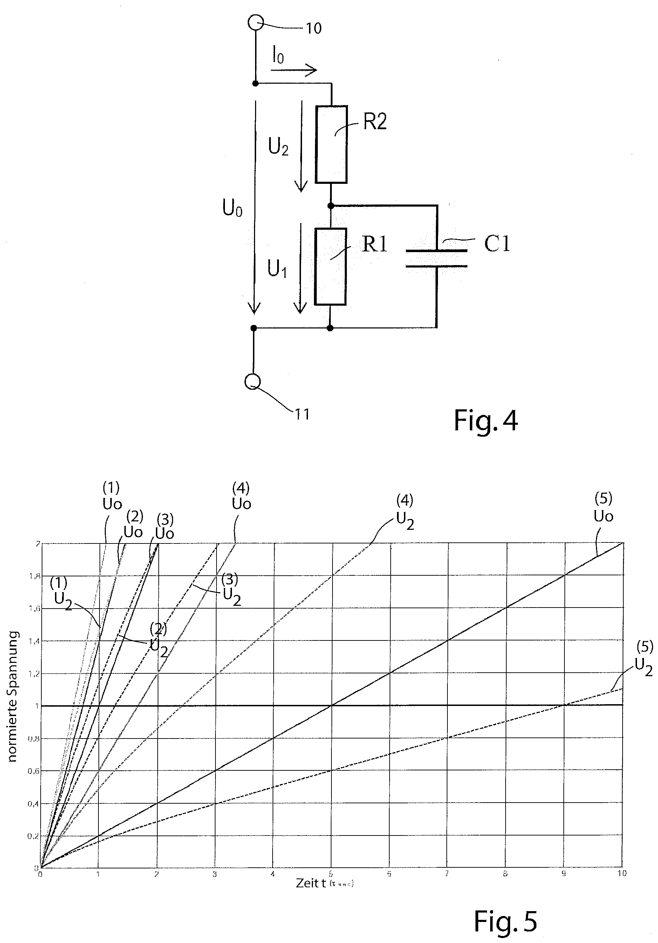

Die Gasableiter FS1 und FS2 verhalten sich im nicht gezündeten Zustand nahezu wie ein Kondensator mit sehr niedriger Kapazität. Diese Kapazität kann bei ausreichend niederohmig dimensionierten Zusatzbeschaltungselementen somit vernachlässigt werden. Folglich wird die Verteilung der Spannung an den in Serie geschalteten Gasableitern FS1 und FS2 in diesem Zustand lediglich durch die Zusatzbeschaltung bestimmt, bzw. die Gasableiter FS1 und FS2 befinden sich im "Leerlauf". In der Fig.4 ist zur Erläuterung der Spannungsverteilung der Spannung $U_0$ bzw. $U_1$ und $U_2$ im Ersatzschaltbild dargestellt. Auf Grundlage dieser Ersatzschaltung werden die zeitlichen Spannungsverläufe $U_1$ und $U_2$ an den Gasableitern und die daraus die zu erwartende Zündspannung der Gesamtanordnung in Abhängigkeit der Flankensteilheit/Anstiegszeit bestimmt.

Aus

$$u_1(t) = u_0(t) - u_2(t) = u_0(t) - R_2 \cdot i_0(t)$$

und

$$i_0(t) = \frac{u_1(t)}{R_1} + C_1 \cdot \frac{du_1(t)}{dt}$$

ergibt sich eingesetzt

$$u_1(t) = u_0(t) - \frac{R_2}{R_1} \cdot u_1(t) - R_2 \cdot C_1 \cdot \frac{du_1(t)}{dt}$$

und umgeformt

$$u_0(t) = \left(1 + \frac{R_2}{R_1}\right) \cdot u_1(t) + R_2 \cdot C_1 \cdot \frac{du_1(t)}{dt}$$

Durch Laplace-Transformation ergibt sich die die Spannung $U_1$ zu

$$U_1(s) = \frac{1}{\left(1 + \frac{R_2}{R_1}\right) + R_2 \cdot C_1 \cdot s} \cdot U_0(s) = \frac{R_1}{R_1 + R_2} \cdot \frac{1}{1 + \frac{R_1 \cdot R_2}{R_1 + R_2} \cdot C_1 \cdot s} \cdot U_0(s)$$

Unter der Annahme einer Rampe mit Flankensteilheit bzw. Steigung k ergibt sich die Spannung $U_0$ zu:

$$u_0(\text{t}) = \begin{cases} 0 & , \ t < 0 \\ k \cdot t & , \ t \geq 0 \end{cases} \quad \overset{Laplace}{\Longleftrightarrow} \quad U_0(s) = \frac{k}{s^2}$$

und damit die resultierende Spannung $U_1$ zu

$$U_1(s) = k \cdot \frac{R_1}{R_1+R_2} \cdot \frac{1}{\left(1+\frac{R_1 \cdot R_2}{R_1+R_2} \cdot C_1 \cdot s\right) \cdot s^2} = k \cdot \frac{R_1}{R_1+R_2} \cdot \frac{1}{(1+\tau \cdot s) \cdot s^2}$$

$$\text{mit } \tau = \frac{R_1 \cdot R_2}{R_1+R_2} \cdot C_1$$

Mit folgender Laplace-Korrespondenz

$$u_0(\text{t}) = \tau \cdot e^{-\frac{t}{\tau}} + t - \tau \quad \overset{Laplace}{\Longleftrightarrow} \quad U_0(s) = \frac{1}{(1+\tau \cdot s) \cdot s^2}$$

ergibt sich die Spannung $U_1$ im Zeitbereich zu

$$u_1(t) = k \cdot \frac{R_1}{R_1+R_2} \cdot \left(\tau \cdot e^{-\frac{t}{\tau}} + t - \tau\right)$$

Die Spannung $U_2$ ergibt sich damit gemäß der folgenden Formel:

$$u_2(t) = k \cdot \left(t - \frac{R_1}{R_1+R_2} \cdot \left(\tau \cdot e^{-\frac{t}{\tau}} + t - \tau\right)\right)$$

$$\frac{u_0(t)}{u_2(t)} = \frac{1}{1 - \frac{R_1}{R_1+R_2} \cdot \left(\frac{\tau}{t} \cdot e^{-\frac{t}{\tau}} + 1 - \frac{\tau}{t}\right)}$$

bzw. mit auf die RC-Zeitkonstante $\tau$ normierter Zeit zu

$$\frac{u_0(t^*)}{u_2(t^*)} = \frac{1}{1 - \frac{R_1}{R_1+R_2} \cdot \left(\frac{1}{t^*} \cdot e^{-t^*} + 1 - \frac{1}{t^*}\right)} \quad \text{mit} \quad t^* = \frac{t}{\tau}$$

Aus der Fig.5 ergibt sich demnach Spannungsverlauf der Spannung $U_2$ aus der im Verhältnis zur Gesamtspannung $U_0$. Der zeitliche Verlauf der Spannungen $U_0$ und $U_2$ ist für unterschiedliche Anstiegszeiten und eine jeweils symmetrische Dimensionierung der Widerstände R1 und R2 (R1 = R2) dargestellt.

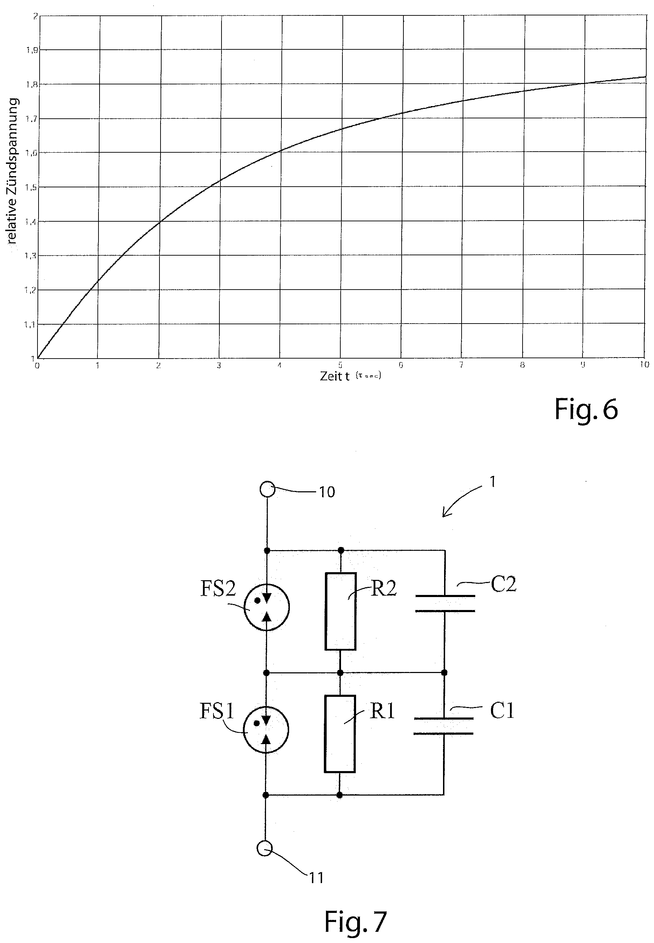

Der Verlauf der Zündspannung der Schutzschaltung bezogen auf die Zündspannung des zweiten Gasableiters FS2 in Abhängigkeit der Anstiegszeit der angelegten Spannung $U_0$ bei symmetrischer Dimensionierung der Parallelwiderstände R1 und R2 (R1 = R2) ist aus der Fig. 6 ersichtlich. Nach der Durchzündung des Gasableiters FS2 wird der Spannungsabfall $U_1$ nur noch durch dessen Brennspannung $U_{Br}$ bestimmt. Idealisiert kann hierbei von einem Kurzschluss ausgegangen werden. Somit ergibt sich im Folgenden die Spannung $U_2$ gleich der Spannung $U_0$, welche bereits zum Zünden des Gasableiters FS2 ausreichend hoch war und nun folglich auch zum direkten Zünden des Gasableiters FS1 ausreicht. Beide Gasableiter FS1 und FS2 sind daher direkt nach dem Erreichen der Zündspannung am Gasableiter FS2 durchgezündet.

Bei welcher Gesamtspannung der Gasableiter FS2 und folglich auch der Gasableiter FS1 zündet, wird durch die Anstiegszeit der an der Gesamtanordnung angelegten Spannung im Verhältnis zur Zeitkonstanten der Zusatzbeschaltung bestimmt, wodurch die erfindungsgemäße Ansprechcharakteristik erzielt werden kann.

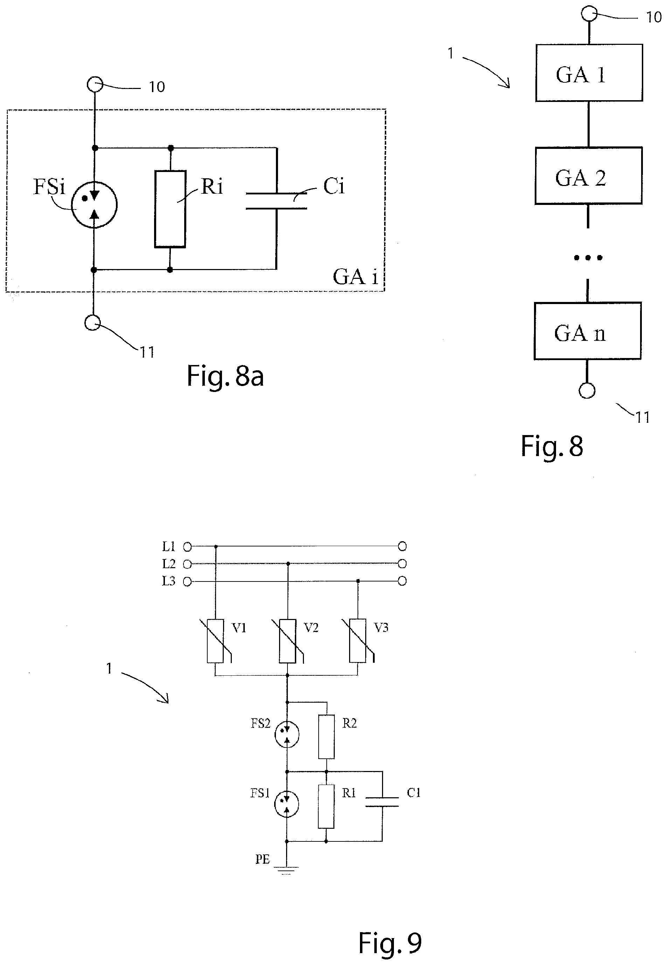

In der Fig.7 ist ein zweites Ausführungsbeispiel einer erfindungsgemäßen Überspannungsschutzschaltung 1 und in der Fig.8 ist ein drittes Ausführungsbeispiel einer erfindungsgemäßen Überspannungsschutzschaltung 1 gezeigt.

Die Überspannungsschutzschaltung 1 gemäß Figur 7 unterscheided sich vom ersten Ausführungsbeispiel gemäß Figur 1 dahingehend, dass ferner ein Kondensator C2 parallel zum Gasableiter FS2 geschaltet ist, während in der Fig. 8 eine Überspannungsschutzschaltung 1 mittels kaskadierender Anordnung von zwei bis n Schaltungen GAi gemäß der Fig. 8a, die jeweils aus Gasableitern FSi (FS1, FS2, ... FSn) mit Parallelwiderstand Ri (R1, R2,..., Rn) und/oder jeweils parallel geschaltetem Kondensator Ci (C1, C2,..., Cn) bestehen.

Die Fig.9 zeigt eine Anordnung der erfindungsgemäßen Überspannungsschutzschaltung 1 nach Figur 1 im Sternpunkt einer Varistor-Beschaltung im Eingangsfilter eines dreiphasig gespeisten EC-Motors.

Die Erfindung beschränkt sich in ihrer Ausführung nicht auf die vorstehend angegebenen bevorzugten Ausführungsbeispiele. Vielmehr ist eine Anzahl von Varianten denkbar, die sich im Rahmen der nachfolgenden Ansprüche bewegen.

## Patentansprüche

1. Überspannungsschutzschaltung (1) zum Schutz der Elektronik eines Motorsgegen Überspannungsimpulse mit zwei zwischen zwei Anschlüssen (10, 20) in Reihenschaltung angeordneten Schutzeinrichtungen (FS1, FS2), wobei zu jeder der Schutzeinrichtungen (FS1, FS2) je ein Widerstand (R1, R2) parallel geschaltet ist und wenigstens ein kapazitives Element (C1) in Parallelschaltung zu der ersten Schutzeinrichtung (FS1) vorgesehen ist, wobei die Überspannungsschutzschaltung (1) zwischen den Anschlüssen (10, 20) wenigstens einen ersten niedrigen und zweiten höheren Durchbruch- bzw. Durchzündspannungspunkt bei einer Spannung $U_{Z1}$ bzw. $U_{Z2}$ in Abhängigkeit von der zeitlichen Spannungsänderung k= dU/dt einer Spannung $U_{GA}$ an den Anschlüssen (10, 20) besitzt, wobei jede Schutzeinrichtung (FS1, FS2) einen spannungsabhängigen Widerstand aufweist und unterhalb einer jeweiligen schutzeinrichtungsspezifischen Durchbruch- bzw. Durchzündspannung jeweils isolierend und oberhalb der entsprechenden Durchbruch- bzw. Durchzündspannung leitend ist, **dadurch gekennzeichnet, dass** ein Ansprechverhalten der Überspannungsschutzschaltung (1) bei einer langsamen Spannungsänderung der Spannung $U_{GA}$ bei einer zweiten höheren Durchbruch- bzw. Durchzündspannung und bei einer schnellen Spannungsänderung der Spannung $U_{GA}$ bei einer ersten niedrigen Durchbruch- bzw. Durchzündspannung erfolgt, wobei bei der schnellen Spannungsänderung der Spannung $U_{GA}$ auf die Durchbruch- bzw. Durchzündspannung $U_{Z1}$ d.h. bei k größer einem systemspezifischen Wert $k_{spez}$ wenigstens eine der beiden Schutzeinrichtung (FS1, FS2) leitend wird oder ein Lichtbogen zündet und wobei bei der langsamen Spannungsänderung der Spannung $U_{GA}$ d.h. bei k kleiner einem systemspezifischen Wert $k_{spez}$ eine oder beide Schutzeinrichtungen (FS1, FS2) erst bei Erreichen der zweiten höheren Durchbruch- bzw. Durchzündspannung $U_{Z2}$ leitend werden oder ein Lichtbogen in wenigstens einer der Schutzeinrichtungen (FS1, FS2) zündet.

2. Überspannungsschutzschaltung (1) nach Anspruch 1, **dadurch gekennzeichnet, dass** die Schutzeinrichtungen (FS1, FS2) als Gasableiter, Überspannungsableiter oder Varistoren ausgebildet sind.

3. Überspannungsschutzschaltung (1) nach einem der vorhergehenden Ansprüche, **dadurch gekennzeichnet, dass** eine Serienschaltung von wenigstens zwei Schutzeinrichtung (FS1, FS2, ... FSn) vorgesehen ist, wobei mit jeweils einem zu der jeweiligen Schutzeinrichtung (FS1, FS2, ... FSn) angeordneter Parallelwiderstand (R1, R2,..., Rn) und/oder einem jeweils in Parallelschaltung angeordneten kapazitiven Elementes (C1, C2,..., Cn).

4. Überspannungsschutzschaltung (1) nach Anspruch 1 oder 3, **dadurch gekennzeichnet, dass** das oder die kapazitiven Elemente (C1, C2, ..., Cn) einen Kondensator darstellen.

5. Überspannungsschutzschaltung (1) nach einem der vorhergehenden Ansprüche, **dadurch gekennzeichnet, dass** diese im Sternpunkt einer Varistor-Beschaltung im Eingangsfilter eines EC-Motors angeordnet ist.

6. Methode zum Schutz der Elektronik eines Motors gegen Überspannungsimpulse mittels einer Überspannungsschutzschaltung (1) gemäß einem der Ansprüche 1 bis 5, wobei die Schutzeinrichtungen (FS1, FS2) als Gasableiter ausgebildet sind und abhängig von der Flankensteilheit einer zwischen den Anschlüssen (10, 20) angelegten Spannung $U_{GA}$. in wenigstens einer der Gasableiter (FS1, FS2) ein Lichtbogen zündet und somit die Spannung zwischen den Anschlüssen (10, 20) auf eine entsprechend niedrigere Brennspannung $U_{Br}$ der Lichtbögen in den Gasableitern begrenzt wird.

**7.** Methode nach Anspruch 6, wobei bei einem langsamen Anstieg der Spannung eine gegenüber der Durchzündspannung $U_{Z1}$ hohe bzw. höhere Durchzündspannung $U_{Z2}$ erreicht wird bei der ein Lichtbogen in einem der Gasableiter zündet und hingegen bei einem schnellen Anstieg der Spannung bereits bei Erreichen der niedrigeren Durchzündspannung $U_{Z1}$ ein Lichtbogen in beiden Gasableitern (FS1, FS2) zündet.

**Claims**

**1.** An overvoltage protection circuit (1) for protecting the electronics of a motor against overvoltage pulses, with two protective devices (FS1, FS2) which are arranged in series connection between two connections (10, 20), wherein a resistor (R1, R2) is connected in parallel to each of the protective devices (FS1, FS2) and at least one capacitive element (C1) is provided in parallel connection to the first protective device (FS1), wherein the overvoltage protection circuit (1) has, between the connections (10, 20), at least a first lower and a second higher breakdown voltage point respectively ignition voltage point at a voltage $U_{Z1}$ respectively $U_{Z2}$ dependent on the voltage change over time k = dU/dt of a voltage $U_{GA}$ at the connections (10, 20), wherein each protective device (FS1, FS2) has a voltage-dependent resistor and is insulating below a respective protective device-specific breakdown voltage respectively ignition voltage, respectively, and conductive above the corresponding breakdown voltage respectively ignition voltage, **characterized in that**, a response behavior of the overvoltage protection circuit (1) takes place in the case of a slow voltage change $U_{GA}$ at a second higher breakdown voltage respectively ignition voltage and in the case of a rapid voltage change of the voltage $U_{GA}$ at a first lower breakdown voltage respectively ignition voltage, wherein in the case of a rapid voltage change of the voltage $U_{GA}$ to the breakdown voltage respectively ignition voltage Uzi, i.e., if k is greater than a system-specific value $k_{spez}$, at least one of the two protective devices (FS1, FS2) becomes conductive or an electric arc is ignited and wherein in the case of a slow voltage change of the voltage $U_{GA}$, i.e., if k is smaller than a system-specific value $k_{spez}$, one or both protective devices (FS1, FS2) become conductive only when the second higher breakdown voltage respectively ignition voltage $U_{Z2}$ has been reached or an electric arc is ignited in at least one of the protective devices (FS1, FS2).

**2.** The overvoltage protection circuit (1) according to Claim 1, **characterized in that** the protective devices (FS1, FS2) are formed as gas discharge tubes, overvoltage arresters or varistors.

**3.** The overvoltage protection circuit (1) according to any one of the preceding claims, **characterized in that** a series connection of at least two protective devices (FS1, FS2, ... FSn) is provided, wherein in each case with a parallel resistor (R1, R2, ..., Rn) arranged relative to the respective protective device (FS1, FS2, ... FSn) and/or a capacitive element (C1, C2, ..., Cn) arranged in each case in parallel connection.

**4.** The overvoltage protection circuit (1) according to Claim 1 or 3, **characterized in that** the capacitive elements(s) (C1, C2, ..., Cn) represent(s) a capacitor.

**5.** The overvoltage protection circuit (1) according to any one of the preceding claims, **characterized in that** said overvoltage protection circuit (1) is arranged at the neutral point of a varistor circuit in the input filter of an EC motor.

**6.** A method for protecting the electronics of a motor against overvoltage pulses by means of an overvoltage protection circuit (1) according to any one of Claims 1 to 5, wherein the protective devices (FS1, FS2) are formed as gas discharge tube tubes, and, depending on the edge slope of a voltage $U_{GA}$ applied between the connections (10, 20), an electric arc is ignited in at least one of the gas discharge tubes (FS1, FS2), and thus the voltage between the connections (10, 20) is limited to a corresponding lower burning voltage $U_{Br}$ of the electric arcs in the gas discharge tubes.

**7.** The method according to Claim 6, wherein, in the case of a slow increase of the voltage a high or higher ignition voltage $U_{Z2}$, with respect to the ignition voltage $U_{Z1}$, is reached, at which an electric arc is ignited in one of the gas discharge tubes, and, on the other hand, in the case of a rapid increase of the voltage, an electric arc is already ignited in both of the gas discharge tubes (FS1, FS2) when the lower ignition voltage $U_{Z1}$ is reached.

**Revendications**

**1.** Circuit de protection contre les surtensions (1) pour la protection de l'électronique d'un moteur contre des impulsions de surtension avec deux dispositifs de protection (FS1, FS2) montés en série entre deux bornes (10, 20), dans lequel respectivement une résistance (R1, R2) est montée en parallèle avec chacun des dispositifs de protection (FS1, FS2) et au moins un élément capacitif (C1) est prévu monté en parallèle avec le premier dispositif de protection (FS1), dans lequel le circuit de protection contre les surtensions (1) possède entre les bornes (10, 20) au moins un premier point de tension de claquage ou de raté de blocage faible et un deuxième point de tension de claquage ou de raté de blocage plus élevé à une tension $U_{Z1}$ ou $U_{Z2}$ en fonction de la variation de tension dans le temps k=dU/dt d'une tension $U_{GA}$ aux bornes (10, 20), dans lequel chaque dispositif de protection (FS1, FS2) présente une résistance dépendant de la tension et est respectivement isolant en dessous d'une tension de claquage ou de raté de blocage respective spécifique au dispositif de protection et conducteur au-dessus de la tension de claquage ou de raté de blocage correspondante, **caractérisé en ce qu'**une réponse du circuit de protection contre les surtensions (1) a lieu lors d'une variation de tension lente de la tension $U_{GA}$ à une deuxième tension de claquage ou de raté de blocage plus élevée et lors d'une variation de tension rapide de la tension $U_{GA}$ à une première tension de claquage ou de raté de blocage faible, dans lequel lors de la variation de tension rapide de la tension $U_{GA}$ à la tension de claquage ou de raté de blocage $U_{Z1}$ autrement dit lorsque k est supérieur à une valeur spécifique au système $k_{spez}$ au moins un des deux dispositifs de protection (FS1, FS2) est conducteur ou un arc électrique se produit et dans lequel lors de la variation de tension lente de la tension $U_{GA}$ autrement dit lorsque k est inférieur à une valeur spécifique au système $k_{spez}$ un ou les deux dispositifs de protection (FS1, FS2) ne deviennent conducteurs que lorsque la deuxième tension de claquage ou de raté de blocage plus élevée $U_{Z2}$ est atteinte ou un arc électrique se produit dans au moins un des dispositifs de protection (FS1, FS2).

2. Circuit de protection contre les surtensions (1) selon la revendication 1, **caractérisé en ce que** les dispositifs de protection (FS1, FS2) sont réalisés en tant qu'éclateurs de gaz, limiteurs de surtension ou varistances.

3. Circuit de protection contre les surtensions (1) selon l'une quelconque des revendications précédentes, **caractérisé en ce qu'**un circuit série d'au moins deux dispositifs de protection (FS1, FS2, ... FSn) est prévu, dans lequel avec respectivement une résistance parallèle (R1, R2, ..., Rn) agencée avec le dispositif de protection (FS1, FS2, ... FSn) respectif et/ou un élément capacitif (C1, C2, ..., Cn) monté respectivement en parallèle.

4. Circuit de protection contre les surtensions (1) selon la revendication 1 ou 3, **caractérisé en ce que** le ou les éléments capacitifs (C1, C2, ..., Cn) constituent un condensateur.

5. Circuit de protection contre les surtensions (1) selon l'une quelconque des revendications précédentes, **caractérisé en ce que** celui-ci est agencé dans le point neutre d'un circuit de varistance dans le filtre d'entrée d'un moteur EC.

6. Méthode de protection de l'électronique d'un moteur contre des impulsions de surtension au moyen d'un circuit de protection contre les surtensions (1) selon l'une quelconque des revendications 1 à 5, dans laquelle les dispositifs de protection (FS1, FS2) sont réalisés en tant qu'éclateurs de gaz et en fonction de la pente de flanc d'une tension $U_{GA}$ appliquée entre les bornes (10, 20), un arc électrique se produit dans au moins un des éclateurs de gaz (FS1, FS2) et ainsi la tension entre les bornes (10, 20) est limitée à une tension de maintien $U_{Br}$ d'autant plus faible des arcs électriques dans les éclateurs de gaz.

7. Méthode selon la revendication 6, dans laquelle lors d'une augmentation lente de la tension une tension de raté de blocage $U_{Z2}$ élevée ou plus élevée par rapport à la tension de raté de blocage $U_{Z1}$ est atteinte à laquelle un arc électrique se produit dans un des éclateurs de gaz et inversement lors d'une augmentation rapide de la tension un arc électrique se produit dans les deux éclateurs de gaz (FS1, FS2) dès lors que la tension de raté de blocage $U_{Z1}$ plus faible est atteinte.

Fig. 1

Fig. 2

Fig. 3

Fig. 4

Fig. 5

Fig. 6

Fig. 7

Fig. 8a

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007921 A1

- CH 596682 A5